# DEMANDE DE BREVET EUROPEEN

(11) **EP 1 164 725 A1**
(43) Date de publication de la demande: **19.12.2001**
(21) Numéro de dépôt: 01401484.9
(22) Date de dépôt: 08.06.2001
(51) Int. Cl.: H04B 15/02

(54) **Atténuation du bruit de salve dans un appareil de radiotéléphonie**

(30) Priorité: 15.06.2000 FR 0007621
(71) Demandeur: SAGEM SA, 75116 Paris (FR)
(72) Inventeur: Heurtaux, Frédéric, 13610 Le Puy Sainte Reparade (FR)
(74) Mandataire: Fruchard, Guy

(57) **Abrégé**

L'invention concerne un procédé pour atténuer un bruit dit de salve, perturbant un signal utile transitant par un circuit analogique (6,26) vers au moins un haut-parleur (7) ou un écouteur, ou en provenance d'un micro (20), d'un appareil de radiotéléphonie doté d'au moins une unité de traitement numérique (1) mettant en oeuvre un procédé de communication par salves (2), caractérisé en ce qu'on superpose au signal utile (6) un signal de compensation (17) du bruit de salve, élaboré par un module de compensation (12) coopérant avec l'unité de traitement numérique (1), à partir d'au moins un modèle préétabli de compensation indépendant du signal utile et stocké en mémoire (13) dans l'appareil.

## Description

L'invention concerne un procédé pour atténuer le bruit de salve dans un appareil de radiotéléphonie.

Dans de tels appareils, et en particulier les appareils utilisant une technologie à accès multiple à répartition dans le temps, telle qu'utilisée dans un réseau dit GSM, les émissions radio sont généralement envoyées par salves, en raison du mode de gestion des communications entre ces appareils et les bases de transmission fixes. Ces émissions sont gérées dans l'appareil par une unité de traitement numérique qui coopère avec un circuit radio qui effectue l'émission et assure la réception de signaux radio.

Ce procédé d'émission par salves donne naissance à un signal correspondant à l'enveloppe de la salve, dont le spectre révèle des composantes dépendant essentiellement du rythme et de la durée des salves, par exemple des composantes significatives vers 200 Hz environ dans le cas du GSM.

Ces appareils possèdent un circuit analogique, c'est à dire une partie de l'appareil dans laquelle le signal est en mode analogique, qui sert à faire transiter des signaux utiles de l'unité de traitement numérique vers le haut-parleur ou les écouteurs, ou encore du micro vers l'unité de traitement numérique. Le circuit analogique de l'appareil, en particulier les pistes de circuit imprimé, la circuiterie de polarisation ou l'amplificateur, s'il est monté comme composant isolé pour l'écoute amplifiée, est susceptible de capter fortuitement ce signal de salve, ce qui a pour effet de dénaturer le signal utile transporté, par la superposition sur ce signal utile d'un signal de bruit dit bruit de salve.

L'utilisateur de l'appareil peut en ressentir une manifestation auditive sous la forme d'un bourdonnement superposé au signal utile, qui diminue le confort d'écoute.

C'est donc par un signal généré par l'appareil lui-même que le signal utile est perturbé. La technique généralement utilisée pour atténuer ce bruit consiste à séparer physiquement et à espacer dans l'appareil le circuit radio et le circuit analogique.

Cette technique ne permet pourtant pas d'éliminer totalement le bruit. En outre, la compacité toujours plus poussée des appareils en rend son application difficile, voire impossible.

Par ailleurs, et malgré toutes les précautions prises, un certain nombre de modes de fonctionnement mettant en oeuvre de forts gains d'amplification (notamment la fonction haut-parleur ou mains libres) sont susceptibles d'amplifier ce bruit parasite.

On connaît des procédés de filtrage analogique du bruit de salve, tel que celui présenté dans le document JP-A-08116315. Mais ce type de procédé nécessite l'intégration de composants électroniques supplémentaires dans l'appareil, ce qui s'oppose à la miniaturisation habituellement recherchée.

L'invention concerne un procédé de traitement numérique du bruit de salve.

A cet égard, le document WO-00 07177-A présente un procédé d'atténuation du bruit de salve par un traitement numérique du signal utile contenant le bruit. Dans un premier mode de réalisation, le procédé consiste à découper le signal utile en bandes de fréquence, à atténuer les bandes dans lesquelles le bruit de salve est susceptible d'être présent en fonction d'un rapport signal sur bruit dans ces bandes, puis de recomposer le signal utile. Dans un second mode de réalisation, le procédé consiste en un filtrage numérique adaptatif du signal utile dont les paramètres dépendent d'une corrélation entre le signal utile et un signal de retard, le retard correspondant à un temps caractéristique d'apparition du bruit de salve. Dans les deux procédés présentés, le signal utile est affecté par le procédé d'atténuation, certaines de ses composantes étant supprimées ou affaiblies en même temps que le bruit de salve, ce qui peut causer une distorsion du signal utile. Par ailleurs, l'atténuation dépend dans les deux cas de caractéristiques du signal utile, ce qui impose l'utilisation de techniques numériques complexes pour mesurer ces caractéristiques.

Selon l'invention, le traitement numérique consiste à superposer au signal utile un signal de compensation du bruit de salve, élaboré par un module de compensation coopérant avec l'unité de traitement numérique, à partir d'au moins un modèle préétabli de compensation indépendant du signal utile et stocké en mémoire dans l'appareil.

Ainsi, le signal peut être corrigé sans qu'il soit nécessaire de mesurer la perturbation lors de chaque traitement numérique du signal.

Avantageusement, le modèle de compensation est élaboré à partir de mesures préliminaires du bruit généré par l'envoi de salves parasitant le signal utile.

Ainsi, on connaît les caractéristiques intrinsèques de ce bruit, et on peut le contrer efficacement en élaborant un modèle de compensation qui contient tous les paramètres utiles à la génération d'un signal de compensation.

Selon un mode particulier de réalisation de l'invention, le modèle de compensation est mis à jour en cours d'utilisation de l'appareil par une procédure d'autocalibration.

Ceci permet d'adapter le modèle de compensation en temps réel aux conditions d'utilisation et de fonctionnement de l'appareil.

Avantageusement, le signal de compensation est synchronisé avec le signal à compenser. De cette façon, on s'assure que la compensation est effectuée à un instant permettant de superposer exactement le signal de correction avec le bruit à éliminer.

Avantageusement, le modèle de compensation utilisé est sélectionné parmi plusieurs modèles de compensation correspondant chacun à un mode d'opération particulier de l'appareil.

D'autres caractéristiques et avantages de l'invention apparaîtront à la lecture de la description qui suit et des dessins annexés, en référence aux figures parmi lesquelles :
- la figure 1 est un schéma par blocs montrant un mode particulier de mise en oeuvre de l'invention pour un signal à destination de l'écouteur de l'appareil,
- la figure 2 est un schéma par blocs montrant un mode particulier de mise en oeuvre de l'invention pour un signal provenant du micro de l'appareil.

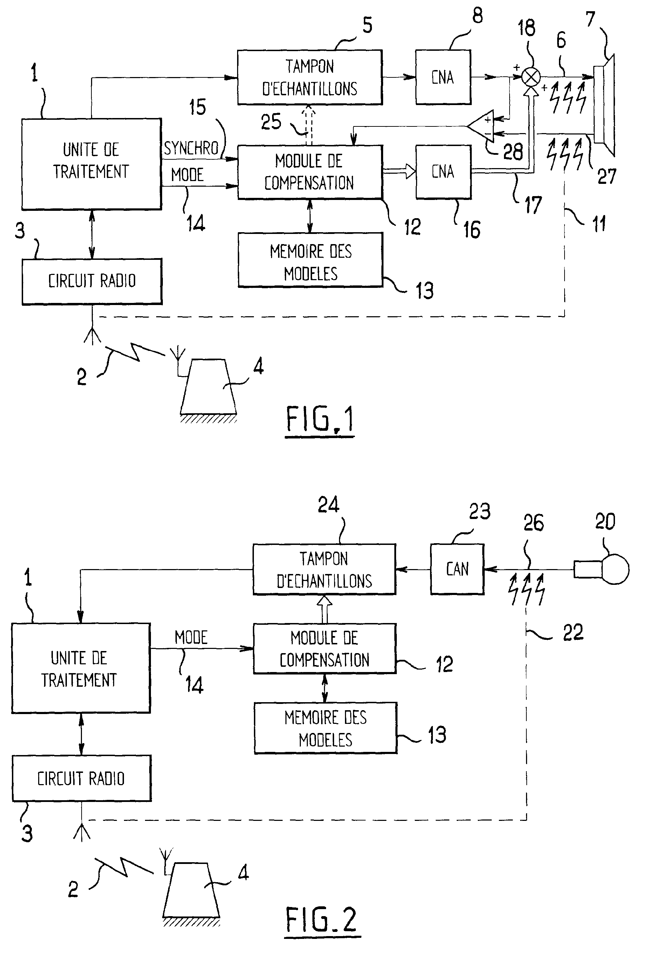

La figure 1 illustre la mise en oeuvre du procédé de l'invention, pour un appareil de radiotéléphonie dans lequel une unité de traitement numérique 1 est chargée de gérer l'émission et la réception de signaux radio 2 au moyen du circuit radio 3. L'unité de traitement numérique 1 extrait la partie utile du signal reçu de la station fixe 4, et la stocke dans une mémoire tampon d'échantillons numériques 5. Ces échantillons sont convertis en un signal analogique au moyen d'un convertisseur numérique analogique 8 et transmis à l'écouteur 7 au moyen du circuit analogique 6.

Ainsi réalisé, le circuit analogique 6 est perturbé par un bruit de salve résultant du couplage de la partie puissance du circuit radio avec le circuit analogique 6. Cette perturbation est symboliquement représentée par une ligne en tirets 11.

Dans ce cas, il s'agit d'un traitement numérique approprié anticipant l'effet du bruit de salve et permettant de l'atténuer par superposition d'un signal de compensation. A cet effet, un module de compensation 12 prélève dans une mémoire de modèles de compensation 13 un modèle adapté choisi en fonction d'une information 14 sur le mode de fonctionnement de l'appareil fournie par l'unité de traitement numérique 1.

Les modèles de compensation sont établis de façon connue en soi selon la technique de traitement numérique antibruit actif consistant à échantillonner le signal de bruit et à générer un signal de compensation en opposition de phase avec le signal à éliminer. Les modèles de compensation sont de préférence établis en atelier, ce qui permet d'effectuer un échantillonnage à une fréquence élevée et de préparer des modèles correspondant à différents modes de fonctionnement de l'appareil, notamment mode écouteur, haut-parleur, ou mains libres.

Ces modèles sont avantageusement mis à jour par une procédure d'autocalibration. Cette procédure peut prendre la forme suivante: on capte par une ligne analogique de retour 27 de trajet et de caractéristiques similaires au circuit analogique 6 le signal utile réellement arrivé au haut-parleur, et on le compare au signal utile émis par le comparateur 28. On obtient ainsi une mesure non pas du bruit de salve perturbateur, mais du bruit multiplié par un certain coefficient sensiblement égal à deux, puisqu'aussi bien la ligne analogique directe 6 que la ligne analogique de retour 27 ont été perturbées. Cette erreur est envoyée après numérisation au module de compensation 12, qui corrige le signal utile du bruit ainsi mesuré pondéré par l'inverse du coefficient précédent, pour compenser totalement le bruit au niveau du haut-parleur. Les couplages n'étant pas nécessairement identiques pour les deux voies, on effectuera de préférence une mesure du rapport de couplage des deux voies lors de la conception de la carte, ou sur la ligne de production afin d'affiner le coefficient utilisé en pratique.

L'unité de traitement numérique 1 génère aussi une information de synchronisation 15 au module de compensation 12 le prévenant de l'imminence d'une salve ou de l'instant de son déclenchement, et permettant à ce dernier de générer un signal de compensation synchronisé.

Selon un premier mode de mise en oeuvre illustré par la flèche en trait double tireté 25, le module de compensation modifie directement les données contenues dans la mémoire tampon 5, de telle façon que quand celles-ci sont converties par le convertisseur numérique-analogique 8, le signal résultant contient une composante qui atténue, voire annule de façon préventive l'effet du parasitage par le bruit de salve auquel le circuit analogique est soumis.

Selon un deuxième mode de mise en oeuvre, le module de compensation génère un signal numérique qui est converti en un signal analogique par un convertisseur numérique-analogique 16. Le signal analogique est transmis par une ligne 17 et est mélangé au signal utile par un additionneur 18, de préférence disposé juste en aval du convertisseur numérique/analogique 8.

Ce deuxième mode de mise en oeuvre permet de réaliser une compensation plus précise en effectuant un échantillonnage du signal de compensation à une fréquence plus élevée que celle du signal utile issu de la chaîne de réception radio. Il est toutefois plus coûteux en raison du convertisseur additionnel 16.

A la figure 2, le procédé de l'invention est mis en oeuvre pour corriger l'effet du signal de salve sur le signal utile issu d'un micro 20. Le signal issu du micro 20 transite par le circuit analogique 26 pour être converti par un convertisseur analogique-numérique 23 en échantillons stockés dans une mémoire tampon 24. Le circuit analogique 26 est susceptible de capter le bruit de salve, ainsi que cela est symboliquement représenté par la ligne en tirets 22. Le problème de l'atténuation du bruit de salve est un peu plus simple que dans le cas décrit à la figure 1 en ce sens qu'il s'agit ici d'un post-traitement numérique d'un signal qui contient déjà le bruit au moment où il est échantillonné. L'échantillonnage constitue un filtre d'une partie du bruit de sorte qu'il suffit de corriger les échantillons mémorisés dans la mémoire tampon 24 pour éliminer complètement le bruit. L'unité de traitement numérique 1 ayant en mémoire la séquence des salves envoyées simultanément à l'élaboration signal utile par le micro 20, il est alors aisé d'en corriger les effets induits modifiant directement dans la mémoire tampon 24 les échantillons stockés par le module de compensation 12, qui choisit pour ce faire un modèle de compensation dans la mémoire 13 en fonction d'une indication 14 du mode de fonctionnement émise par l'unité de traitement numérique 1, et le cas échéant de l'information de synchronisation 15.

L'invention n'est pas limitée aux modes de mise en oeuvre particuliers qui viennent d'être décrits, mais entend au contraire englober toute variante, qui, avec des moyens équivalents, reproduit les caractéristiques essentielles évoquées plus haut.

En particulier, bien que l'invention ait été décrite plus particulièrement en relation avec une correction positive du bruit de salve, c'est à dire par application d'un signal en opposition de phase avec le bruit de salve, on pourra par exemple effectuer un filtrage du signal. Ce filtrage aura pour effet de débarrasser le signal utile du bruit de salve, soit par un filtrage correcteur lorsque le bruit de salve est déjà présent, comme c'est le cas du signal transitant par le circuit analogique en provenance du micro de l'appareil, soit par un filtrage prédictif lors du passage du signal dans le circuit analogique vers le haut-parleur.

Bien que l'invention ait été décrite en prévoyant un traitement des échantillons numériques du signal utile alors que ceux-ci sont stockés dans la mémoire tampon 5, on peut également prévoir d'appliquer la correction au vol, échantillon par échantillon, par exemple à la sortie d'un organe de traitement immédiatement en amont du convertisseur numérique/analogique.

## Revendications

1. Procédé pour atténuer un bruit dit de salve, perturbant un signal utile transitant par un circuit analogique (6,26) vers au moins un haut-parleur (7) ou un écouteur, ou en provenance d'un micro (20), d'un appareil de radiotéléphonie doté d'au moins une unité de traitement numérique (1) mettant en oeuvre un procédé de communication par salves (2), **caractérisé en ce qu'**on superpose au signal utile (6) un signal de compensation (17) du bruit de salve, élaboré par un module de compensation (12) coopérant avec l'unité de traitement numérique (1), à partir d'au moins un modèle préétabli de compensation indépendant du signal utile et stocké en mémoire (13) dans l'appareil.

2. Procédé selon la revendication 1, **caractérisé en ce que** le modèle de compensation est élaboré à partir de mesures du bruit généré dans le circuit analogique (6,26) par des salves.

3. Procédé selon la revendication 1, **caractérisé en ce que** le modèle de compensation est mis à jour en cours d'utilisation de l'appareil par une procédure d'autocalibration.

4. Procédé selon la revendication 3, **caractérisé en ce que** l'on capte le signal réellement reçu par l'écouteur ou le haut-parleur (7) au moyen d'une ligne analogique de retour (27), **en ce que** l'on compare ce signal avec le signal utile envoyé pour déterminer une erreur, et **en ce que** l'on corrige le signal utile de sensiblement la moitié de l'erreur ainsi mesurée.

5. Procédé selon l'une des revendications précédentes, **caractérisé en ce que** la synchronisation du signal de compensation avec le signal utile à destination de l'écouteur ou de haut-parleur (7) est assurée par l'envoi d'une information de synchronisation (15) par l'unité de traitement numérique (1) au module de compensation (12).

6. Procédé selon la revendication 5, **caractérisé en ce que** le module de compensation (12) génère un signal numérique rendu analogique qui se superpose au signal utile rendu analogique.

7. Procédé selon la revendication 5, **caractérisé en ce que** le signal utile est stocké sous forme d'échantillons numériques dans une mémoire tampon (5), et **en ce que** le module de compensation (12) modifie directement les échantillons du signal utile dans le tampon (5).

8. Procédé selon l'une des revendications 1 à 7, **caractérisé en ce que** le modèle de compensation utilisé est sélectionné parmi plusieurs modèles de compensation correspondant chacun à un mode d'opération de l'appareil.

9. Procédé selon la revendication 8, **caractérisé en ce que** le modèle de compensation est sélectionné à partir d'une indication (14) du mode de fonctionnement émise par l'unité de traitement numérique (1) vers le module de compensation (12).
